# EUROPEAN PATENT SPECIFICATION

(11) **EP 1 250 297 B1**
(45) Date of publication and mention of the grant of the patent: **26.10.2005**
(21) Application number: 00942631.3
(22) Date of filing: 16.06.2000
(51) Int. Cl.: C03C 25/12

(54) **UV-CURE OF COATINGS FOR AN OPTICAL FIBER WITH A LASER**
UV-HÄRTUNG VON BESCHICHTUNGEN FÜR EINE OPTISCHEN FASER MIT EINEM LASER
DURCISSEMENT ULTRAVIOLET DE REVETEMENTS DE FIBRES OPTIQUES AU LASER

(43) Date of publication of application: 23.10.2002
(73) Proprietor: Draka Comteq B.V., 1018 TX Amsterdam (NL)
(72) Inventor: KHUDYAKOV, Igor, Vladimir, Hickory, NC 28601 (US); PURVIS, Michael, B., Hickory, NC 28601 (US); OVERTON, Bob, J., Lenior, NC 28645 (US)
(74) Representative: Algemeen Octrooi- en Merkenbureau
(86) International application number: PCT/US2000/011879
(87) International publication number: WO 2001/098223

(56) References cited:
- EP-A- 0 202 803
- GB-A- 2 166 975
- US-A- 4 774 104
- US-A- 4 812 150
- US-A- 4 849 640
- PATENT ABSTRACTS OF JAPAN vol. 013, no. 293 (C-615), 6 July 1989 (1989-07-06) & JP 01 087536 A (SUMITOMO ELECTRIC IND LTD), 31 March 1989 (1989-03-31)

## Description

### Field of Invention

The present invention relates to an effective method to cure a protective coating on an optical fiber with a continuous wave (cw) or a pulsed laser that permits the draw rate for an optical fiber to be increased. In particular, the method relates to aligning a laser beam on a drawn optical fiber for even irradiation and cure of a coating disposed on the fiber.

### Description of Related Art

In the manufacture of an optical fiber, a glass preform rod is moved in a furnace at a controlled rate. The furnace softens the preform so that the optical fiber can be drawn from the molten end of the preform rod by a capstan.

Because the drawn optical fiber is susceptible to damage, a coating must be applied to the optical fiber after it is drawn from the preform rod but before contacting another surface. To provide such a protective coating, a material is applied to the fiber, which must be solidified before the drawn fiber reaches the capstan. The solidification is aided by cure techniques. A wet-on-wet draw technique is an exemplary form of drawing optical fiber from a preform. The wet-on-wet draw technique comprises applying a first coating to the fiber and applying a second coating to the fiber while the first coating is still in its viscous form. Both the first and second coatings are subsequently cured. Other techniques are also known, such as applying a first coating, followed by cure of the first coating, then applying a second coating and cure of the second coating. This second technique requires additional equipment to be included in the draw tower, but is simpler than the wet-on-wet draw technique which requires processing of the first coating while in its viscous form. Other techniques may also be employed, and the invention is not limited to the type of technique used.

A conventional technique for cure of the coating for optical fibers includes irradiation of the coating using a microwave-powered lamp, such as a Fusion lamp. Commonly employed Fusion lamps are H-bulb, D-bulb, and V-bulb in diameters of 9, 11 or 13 mm. However, it is impossible to focus a significant quantity of the lamp light onto the narrow fiber. In practice, only one to several percent of a Fusion lamp may be focused on the fiber element to be coated. Moreover, the energy of a heat Fusion lamp cannot be sufficiently directed making it difficult with coat the fiber in an even manner. Excessive heating effects and infrared radiation introduced by the Fusion lamp also degrade the characteristics for the coating material.

The application of a magnetic field often expedites the polymerization of the fiber coating, as discussed in U.S.P. 5,000,772 (Petisce). However, the bulk of the Fusion lamp makes it difficult for such a magnetic field to be applied to the fiber. To provide a magnetic field strong enough to affect the curing rate in a Fusion lamp arrangement would require a field so strong that it would reduce the microwave discharge of the Fusion lamp. The intensity of the lamp becomes quenched, making it difficult to provide sufficient intensity to cure the coating. Therefore, the technique of increasing the cure rate using a magnetic field is not practicable or convenient with the use of a Fusion lamp.

To improve the efficiency of the curing process, a laser can be used in place of the microwave lamp. U.S.P. 4,812,150 discloses use of a laser to cure coatings by using the laser as a source of heat. However, the laser provides localized heating which will cause the fiber to bow since heating and curing on one side of the fiber will be greater than on the other. Further, excess heat may be generated due to local focusing of the laser beam, resulting in a coating with an undesirable modulus. Other known methods of applying lasers for photocuring purposes, such as U.S.P. 4,227,907 and U.S.P. 5,761,367, suffer from similar deficiencies due to lack of directivity imparted to a laser beam.

### Summary of Invention

The present invention refers to an apparatus and a method for photocuring a coding on a fiber according to claims 1 and 12.

The present invention overcomes the above deficiencies by using a laser source to initiate a photochemical process in the coating, and by using optical devices which produce a collimated laser beam for curing purposes. With such an arrangement, it is possible to cure a fiber coating with a laser source that is displaced from the target fiber. The displacement between the source and the target fiber mitigates the heat and infrared damage to the coating during cure. The optical devices further spread the laser about the target fiber to achieve an even distribution of energy for curing purposes. An elongated beam, provided through a beam expander and plano-concave lens, permits a larger portion of the target fiber coating to be cured at one time. Since the laser source is displaced from the fiber, it becomes practical to apply a magnetic field to the target fiber having a curable coating, thereby further increasing the rate of cure by 20-40%. I.V. Khudyakov, et al., "Kinetics of Photopolymerization of Acrylates Studied with a Cure Monitor and PhotoDSC", **Proceedings of SPIE,** vol. 3848, 1999, p.151-156. This further permits an increase in the draw rate for the optical fiber.

The laser beam wavelength is selected such that the laser energy is absorbed by photoinitiator(s) in the coating. In a preferred embodiment, the coating has two photoinitiators, one with an absorption maximum at approximately 300 mn and one at , approximately 400 nm. The use of two photoinitiators is important for wet-on-wet draw techniques.

### Description of Preferred Embodiment

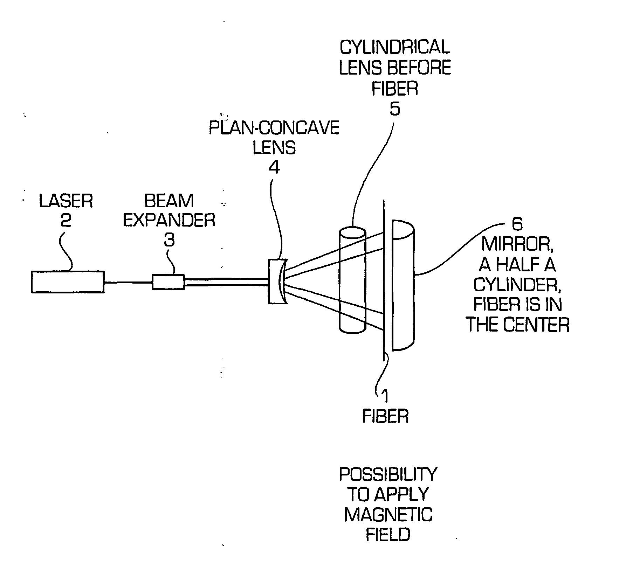

A preferred embodiment will be discussed in detail below with reference to the sole drawing which illustrates an arrangement for directing a collimated laser beam evenly about a target fiber.

Referring to the drawing, a target fiber 1 is drawn from a preform (not shown) and is subjected to an environment to begin the coating process. The invention may be applied to any standard curing environment, including environments for applying primary and secondary coatings. As examples, an environment including a photoinitiator of 2-hydroxy-2-methyl-1-phenylpropan-1-one or 2, 4, 6-trimethylbenzoylphosphineoxide (or a combination thereof) be used.

The target fiber 1 is displaced from a laser 2. An exemplary distance is approximately ten feet. This displacement is further than conventional techniques using a Fusion lamp and provides a benefit by reducing the amount of damaging infrared heat irradiated to the target fiber. The laser source 2 can be selected from numerous types of continuous and pulsed lasers. An example of continuous wave lasers include a Beamlok Ar⁺ manufactured by Spectra-Physics. This laser is operable to emit a number of wavelengths from λ 333 to 351 nm in the ultraviolet range. The Ar⁺ laser is suitable for industrial applications, having a power output of approximately 7 W. An exemplary pulsed laser includes Nd:YAG from Spectron Laser Systems. The third harmonic of the Nd:YAG laser has a wavelength of λ 355 nm, which is the most suitable for curing of a fiber coating. However, other harmonics may also be used for curing purposes. The output power is 5W with a frequency of 10 kHz. Any high frequency UV pulsed laser is suitable. Another acceptable laser is an ultraviolet excimer XeCl laser having λ 308 nm, which is manufactured by Lambda Physik.

Light with the above range of wavelengths is absorbed by most photoinitiators conventionally used for coating materials. However, some photoinitiators are able to absorb energy in the visible light range (e.g. 400 nm to 800 nm), and so a laser source emitting energy in this range may also be used. For instance, a laser diode emitting light in the visible range may also be adapted to initiate polymerization. The process can be aided with the inclusion of dyes absorbing this range of light into the fiber coating. The Ar⁺ laser can be used for simultaneous excitation of two photoinitiators with an absorption maxima in the ultraviolet region. One photoinitiator has an absoprtion maximum closer to 300 nm, another photoinitiator has a maximum closer to 400 nm.

The use of a laser beam source also makes it possible to excite photoinitiators by monochromatic light within a more narrow wavelength (e.g. ± .5 nm). This selectivity makes it possible to initiate and control polymerization for coating materials. By comparison, no such selectivity or control is possible with the Fusion lamp which excites indiscriminately across a broad range (on the order of 100 nm) of wavelengths. The fusion lamp may uncontrollably excite materials such as dyes or pigments included in the optical fiber coating.

Referring to the Figure, the laser is irradiated in the direction of a beam expander 3. The collimated beam of the laser is in the form of an intense spot. If this spot were used for curing purposes, its intensity could potentially damage the target fiber as in conventional systems. Therefore, the beam expander 4 is used to distribute the collimated beam having a small diameter of approximately 2 mm into a larger diameter of one to several inches. The expanded beam is further passed through a plano-concave lens 4 and a cylindrical lens 5 to focus the laser to a length of approximately 3-4 inches (7,62 - 10,2 cm) and having a diameter of several diameters of the target fiber. An exemplary diameter range for the striped beam is 1-3 mm. Opposite to the cylindrical lens on the other side of the fiber is a mirror 6 formed in a half-cylinder shape. The fiber is disposed in the center portion of the mirror. The mirror aids in distributing the light evenly about the target fiber.

The displacement between the laser source and the target fiber can comprise a large distance due to the collimation of the laser and the focusing provided by the optical elements. A displacement of more than 2 meters is permissible. In addition to mitigating extraneous heat effects, this displacement has the additional benefit of allowing space for a magnetic field generator (not shown) to be included in the curing arrangement. The application of the magnetic field is provided by known mechanisms and thus the details are omitted from this description.

The invention may also be implemented without the mirror 6 by disposing one or more additional laser sources about the target fiber to provide symmetrical illumination. For example, two lasers may be disposed 180 degrees apart about the target fiber or three lasers may be disposed 120 degrees apart. The inclusion of several laser sources would increase the intensity (W/cm²) and also the beam exposure (J/cm²). However, because laser sources are costly, the inclusion of the half-cylindrical mirror 6 helps minimize the cost of the curing apparatus.

Through use of a laser and basic optical devices, the laser energy can be focused precisely and uniformly on a drawn fiber. This permits efficient use of curing energy and an increase in the rate that a fiber is drawn. Draw rates at speeds more than 1000 m/min. may be possible with the arrangement described above.

## Claims

1. An apparatus for photocuring a coating on a fiber, comprising :
a laser source (2);
a beam expander (3) for expanding an output of the laser source;
a first lens (4) operable to focus an output of the beam expander to a strip of light extending parallel to the longitudinal axis of a target fiber, said first lens being provided on a front side of the target fiber (1); and
a concave optical element (6) disposed on a rear side of the target fiber and operable to reflect the laser beam.

2. The apparatus of claim 1, wherein said first lens comprises a plano-concave lens (4) with a planar side disposed towards said beam expander.

3. The apparatus of claim 1, wherein said laser source outputs radiation in a visible light range.

4. The apparatus of claim 3, wherein said laser source is a continuous wave laser.

5. The apparatus of claim 3, wherein said laser source is a pulsed laser.

6. The apparatus of claim 1, further comprising a magnetic field source which is operable to apply a magnetic field about said target fiber.

7. The apparatus of claim 1, wherein said laser source is disposed at least 2 meters away from said target fiber.

8. The apparatus of claim 6, wherein said laser source is a continuous wave laser emitting light in the UV range between 300 and 400 nm.

9. The apparatus of claim 1 further comprising a second lens (5) disposed between said first lens (4) and said concave optical element (6).

10. The apparatus of claim 9, wherein said second lens comprises a cylindrical lens (5).

11. The apparatus of claim 10, wherein said laser source is disposed at least 2 meters away from said target fiber.

12. A method of photocuring a fiber, comprising the steps of:
expanding a laser beam to produce an expanded diameter laser beam;
focusing the expanded diameter laser beam onto a front side of a target fiber, said expanded laser beam being focused to a strip of light having a diameter that is larger than the diameter of the target fiber and extending parallel to the longitudinal axis of the target fiber;
reflecting the laser beam strip of light to a rear side of the fiber.

13. The method according to claim 12, further comprising:
applying a magnetic field around the fiber.

14. The method according to claim 12, wherein the laser beam continuously outputs light in a visible portion of electromagnetic spectrum.

15. The method according to claim 12, wherein the laser outputs pulses of visible light.

16. The method according to claim 12, wherein said laser beam emits in the range of 300-400 nm.

17. The method according to claim 12, wherein said laser beam emits radiation in the range of 400-800 nm.

18. The method according to claim 12, wherein a source of said laser beam is disposed at least 2 meters away from the fiber.

19. The apparatus of claim 1, wherein the laser source outputs radiation in a UV radiation range.

20. The apparatus of claim 3, wherein the laser source outputs radiation in a range of 400-800 nm.

## Patentansprüche

1. Vorrichtung zum Photohärten einer Beschichtung auf einer Faser, umfassend:
eine Laserquelle (2);
einen Strahlaufweiter (3) zum Aufweiten einer Ausgabe der Laserquelle;
eine erste Linse (4) zum Fokussieren einer Ausgabe des Strahlaufweiters zu einem Lichtstreifen, welcher sich parallel zur Längsachse einer Zielfaser erstreckt, wobei die erste Linse an einer Vorderseite der Zielfaser (1) vorgesehen ist; und
ein konkaves optisches Element (6), welches an einer Rückseite der Zielfaser angeordnet ist und zum Reflektieren des Laserstrahls dient.

2. Vorrichtung nach Anspruch 1, wobei die erste Linse eine plankonkave Linse (4) mit einer in Richtung des Strahlaulfweiters angeordneten planaren Seite umfasst.

3. Vorrichtung nach Anspruch 1, wobei die Laserquelle Strahlung in einem Bereich des sichtbaren Lichts ausgibt.

4. Vorrichtung nach Anspruch 3, wobei dio Laserquelle ein Dauerstrichlaser ist.

5. Vorrichtung nach Anspruch 3, wobei die Laserquelle ein gepulster Laser ist.

6. Vorrichtung nach Anspruch 1, welche des weiteren eine Magnetfeldquelle umfasst, die betreibbar ist, um ein Magnetfeld um die Zielfaser anzulegen.

7. Vorrichtung nach Anspruch 1, wobei die Laserquelle wenigstens 2 Meter von der Zielfaser weg angeordnet ist.

8. Vorrichtung nach Anspruch 6, wobei die Laserquelle ein Dauerstrichlaser ist, welcher Licht im UV-Bereich zwischen 300 und 400 nm emittiert.

9. Vorrichtung nach Anspruch 1, welche des Weiteren eine zweite Linse (5) umfasst, die zwischen der ersten Linse (4) und dem konkaven optischen Element (6) angeordnet ist.

10. Vorrichtung nach Anspruch 9, wobei die zweite Linse eine zylindrische Linse (5) umfasst.

11. Vorrichtung nach Anspruch 10, wobei die Laserquelle wenigstens 2 Meter von der Zielfaser weg angeordnet ist.

12. Verfahren zum Photohärten einer Faser, umfassend die Schritte:
Aufweiten eines Laserstrahls, um einen Laserstrahl mit einem aufgeweiteten Durchmesser zu erzeugen;
Fokussieren des Laserstrahls mit einem aufgeweiteten Durchmesser auf eine Vorderseite einer Zielfaser, wobei der aufgeweitete Laserstrahl zu einem Lichtstreifen fokussiert wird, welcher einen Durchmesser aufweist, der größer als der Durchmesser der Zielfaser ist, und welcher sich parallel zur Längsachse der Zielfaser erstreckt;
Reflektieren des Laserstrahllichtstreifens auf eine Rückseite der Faser.

13. Verfahren nach Anspruch 12, welches weiterhin umfasst:
Anlegen eines Magnetfelds um die Faser.

14. Verfahren nach Anspruch 12, wobei der Laserstrahl kontinuierlich Licht in einem sichtbaren Abschnitt des elektromagnetischen Spektrums ausgibt.

15. Verfahren nach Anspruch 12, wobei der Laser Pulse von sichtbarem Licht ausgibt.

16. Verfahren nach Anspruch 12, wobei der Laserstrahl im Bereich von 300-400 nm emittiert.

17. Verfahren nach Anspruch 12, wobei der Laserstrahl Strahlung im Bereich von 400-800 nm emittiert.

18. Verfahren nach Anspruch 12, wobei eine Quelle des Laserstrahls wenigstens 2 Meter von der Faser weg angeordnet ist.

19. Vorrichtung nach Anspruch 1, wobei die Laserquelle Strahlung in einem UV-Strahlungsbereich ausgibt.

20. Vorrichtung nach Anspruch 3, wobei die Laserquelle Strahlung in einem Bereich von 400-800 nm ausgibt.

## Revendications

1. Un appareil pour photodurcir une couche sur une fibre, comprenant :
une source laser (2);
un dilatateur de faisceau (3) pour étendre une sortie de la source laser;
une première lentille (4) utilisable pour concentrer une sortie du dilatateur de faisceau en une bande de lumière s'étendant parallèlement à l'axe longitudinal d'une fibre cible, ladite première lentille étant disposée sur un côté avant de la fibre cible (1)
un élément optique concave (6) disposé sur un côté arrière de la fibre cible et utilisable pour réfléchir le faisceau laser.

2. L'appareil selon la revendication 1, dans lequel ladite première lentille comprend la lentille (4) plano-concave avec un côté planaire disposé vers ledit dilatateur de faisceau.

3. L'appareil selon la revendication 1, dans lequel ladite source laser émet des radiations dans un domaine de lumière visible.

4. L'appareil selon la revendication 3, dans lequel ladite source laser est un laser à onde continue.

5. L'appareil selon la revendication 3, dans lequel ladite source laser est un laser à impulsions.

6. L'appareil selon la revendication 1, comprenant en outre une source de champ magnétique qui est utilisable pour appliquer un champ magnétique à ladite fibre cible.

7. L' appareil selon la revendication 1, dans lequel ladite source laser est éloignée d'au moins 2 mètres de ladite fibre cible.

8. L' appareil selon la revendication 6, dans lequel ladite source laser est un laser à onde continue émettant une lumière dans le domaine de l'UV entre 300 et 400 nm.

9. L'appareil selon la revendication 1, comprenant en outre une seconde lentille (5) disposée entre ladite première lentille (4) et ledit élément optique concave (6).

10. L'appareil selon la revendication 9, dans lequel ladite seconde lentille comprend une lentille cylindrique (5).

11. L'appareil selon la revendication 10, dans lequel ladite source laser est éloignée d'au moins 2 mètres de ladite fibre cible.

12. Méthode de photodurcissement d'une fibre, comprenant les étapes de:
dilatation d'un faisceau laser pour produire un faisceau laser à diamètre dilaté;
concentration du faisceau laser à diamètre dilaté sur un côté avant d'une fibre cible,
ledit faisceau laser dilaté étant concentré en une bande de lumière ayant un diamètre qui est plus large que le diamètre de la fibre cible et s'étendant parallèlement à l'axe longitudinal de la fibre cible;
réflexion de la bande de lumière du faisceau laser vers un côté arrière de la fibre.

13. La méthode selon la revendication 12, comprenant en outre: l'application d'un champ magnétique autour de la fibre.

14. La méthode selon la revendication 12, dans laquelle le faisceau laser émet en continu une lumière dans une partie visible du spectre électromagnétique.

15. La méthode selon la revendication 12, dans laquelle lé faisceau laser émet des impulsions de lumière visible.

16. La méthode selon la revendication 12, dans laquelle ledit faisceau laser émet dans le domaine de 300 à 400 nm.

17. La méthode selon la revendication 12, dans laquelle ledit faisceau laser émet des radiations dans le domaine de 400-800 nm.

18. La méthode selon la revendication 12, dans laquelle une source dudit faisceau laser est éloignée d'au moins 2 mètres de la fibre.

19. L'appareil selon la revendication 1, dans lequel la source laser émet des radiations dans un domaine de radiations UV.

20. L' appareil selon la revendication 3, dans lequel la source laser émet des radiations dans un domaine de 400-800 nm.
